# EUROPEAN PATENT SPECIFICATION

(11) **EP 2 759 186 B1**
(45) Date of publication and mention of the grant of the patent: **15.07.2015**
(21) Application number: 14152462.9
(22) Date of filing: 24.01.2014
(51) Int. Cl.: A01B 45/02

(54) **Verticutting device**
Vertikutiergerät
Scarificateur

(30) Priority: 28.01.2013 BE 201300053
(43) Date of publication of application: 30.07.2014
(73) Proprietor: JO Beau Products BVBA, 8200 Brugge (BE)
(72) Inventor: Beauprez, Jozef, 8200 Sint-Andries (BE)
(74) Representative: D'Halleweyn, Nele Veerle Trees Gertrudis

(56) References cited:
- EP-A1- 1 053 666
- EP-A1- 1 632 120
- EP-A1- 1 639 877
- FR-A1- 2 825 568
- GB-A- 2 219 720
- US-A- 4 773 486
- US-A- 5 183 120
- US-A1- 2008 035 355

## Description

The present invention relates to a device for aerating a lawn, also referred to as a lawn aerator or a verticutter according to the preamble of claim 1. In addition, the invention relates to a shaft assembly and to a blade body for use in such a device.

Such a device typically comprises a frame in which a shaft with blades is rotatably mounted. Drive means are typically further provided for rotatingly driving the shaft. In existing lawn aerators use is made of a shaft to which a number of blades are attached. Such embodiment has the drawback that when a blade breaks, for instance as a result of a hard object in the lawn or when a blade is worn, the whole shaft must be replaced, or must at least be removed in order to replace the blade concerned.

US 3,734,197 discloses a knife structure for a knife reel of a turf conditioning apparatus which is mounted upon a square sectioned reel shaft. The knife structure uses replaceable sickle blades.

The present invention has for its object to provide a device of the type stated in the preamble which is more user-friendly and easily repairable in the case of wear or damage.

The device according to the invention is distinguished for this purpose by the features of the characterizing portion of claim 1. The shaft is provided with a plurality of mounting arms. At least one removably mounted blade body is provided on each mounting arm. The blade body is provided on the mounting arm at a location such that elements such as moss and dead grass present between the blades of grass are dislodged by the blade body during the rotation of the shaft in the frame.

By providing mounting arms on which a blade body is removably mounted the following technical advantage is gained. In the case of wear or breakage only the blade body will generally be affected and not the mounting arms. Because the blade body is mounted removably on the mounting arms, a blade body can thus be easily replaced without the whole shaft having to be replaced.

Each blade body is provided with a blade part configured to dislodge moss, dead grass, twigs, leaves and the like. In addition, each blade body can be provided with a stop part configured to co-act with a protruding part on the mounting arm in order to prevent the rotation of the blade body relative to the mounting arm. Such an embodiment is particularly advantageous when the blade bodies are attached to the mounting arms using a nut/bolt connection and it is necessary to avoid the bolts coming loose when the lawn aerator is operational. The protruding part is for instance formed as a cut-out tongue which is pushed outward out of the plane of the mounting arm. Only one additional processing step is in this way necessary for the purpose of forming the protruding part.

Each blade body is provided with a least two blade parts, wherein one blade part thereof functions as the stop part. According to a preferred embodiment, when an operational blade part is worn, the blade body can be mounted in rotated position such that the blade part which has functioned as stop part and is not yet worn can be used as operational blade part for dislodging debris present between the blades of grass, while the worn blade part can still be used as stop part.

Each blade body is still more preferably provided with at least three blade parts, preferably four blade parts. These blade parts are preferably arranged in a regular distribution over the periphery of the blade body. This has the advantage that, each time a blade part is worn, the blade body can be rotated such that a new blade part comes to lie at the location where the worn blade part was previously operative. The configuration with four blade parts is highly advantageous since this number makes it possible for adjacent blade parts not to impede each other, while at the same time a large number of spare blade parts is provided on the same blade body, i.e. only one blade part is operational while the other blade parts function as spare blade parts which do not disrupt operation.

Note that the blade parts preferably form an integral part of the blade body, i.e. they are formed as one part on the blade body.

The blade part preferably has a form with a substantially straight cutting edge and an inclining or arcuate rear edge, wherein the cutting edge makes an angle with the rear edge. This angle is preferably less than 90 degrees. Such a shaping ensures that the blade tip formed by the angle between the cutting edge and the rear edge remains available for a longer time, even in the case of some wear.

The mounting arms are preferably elongate plate-like elements with an opening through which the shaft passes. The mounting arms can be fixedly mounted on the shaft, but can also be mounted as flails, in accordance with the type of lawn aerator that is desired. The opening can be arranged centrally in the mounting arm, wherein a blade body is then arranged at either end of the mounting arm. Adjacent mounting arms can for instance be mounted on the shaft at an angle of 60 degrees relative to each other such that the blade bodies are arranged at 60 degree intervals from each other around the shaft. A spacer can further be provided on the shaft between each pair of adjacent mounting arms in order to ensure that the blade bodies lie at a distance from each other as seen in the longitudinal direction of the shaft.

The blade body is preferably attached by a bolt and a nut. The bolt preferably passes through a central opening in the blade body for the purpose of attaching the blade body to the mounting arm.

The blade body preferably has a substantially flat side which partially supports against a flat side of the mounting arm such that a blade body is firmly fixable against the mounting arm, for instance with a nut and bolt connection.

According to a variant, the blade body is provided with a non-rotation-symmetrical opening through which a shaft part with a complementary shape passes for the purpose of attaching the blade body to the mounting arm. In this way a stop part is not required for the purpose of guaranteeing a firm non-rotatable attachment of a blade body to a mounting arm.

The invention further relates to a shaft assembly with mounting arms for use in a device according to any of the above described embodiments. The shaft assembly can have one or more of the above described features.

The invention also relates to a blade body for use in a device according to any of the above described embodiments and to a mounting arm for use in such a device.

The present invention will be further elucidated on the basis of a number of by no means limitative exemplary embodiments, with reference to the accompanying drawings, in which:
Figure 1 is a perspective view on embodiment of a shaft assembly for mounting in a lawn aerator;
Figure 2 is a perspective detail view of a mounting arm with blade bodies of the embodiment of figure 1;
Figure 3 is a perspective detail view of the mounting arm of figure 2 without the blade bodies;
Figure 4 illustrates a first embodiment of a blade body;
Figure 5 illustrates a second embodiment of a blade body; and
Figure 6 illustrates a third embodiment of a blade body.

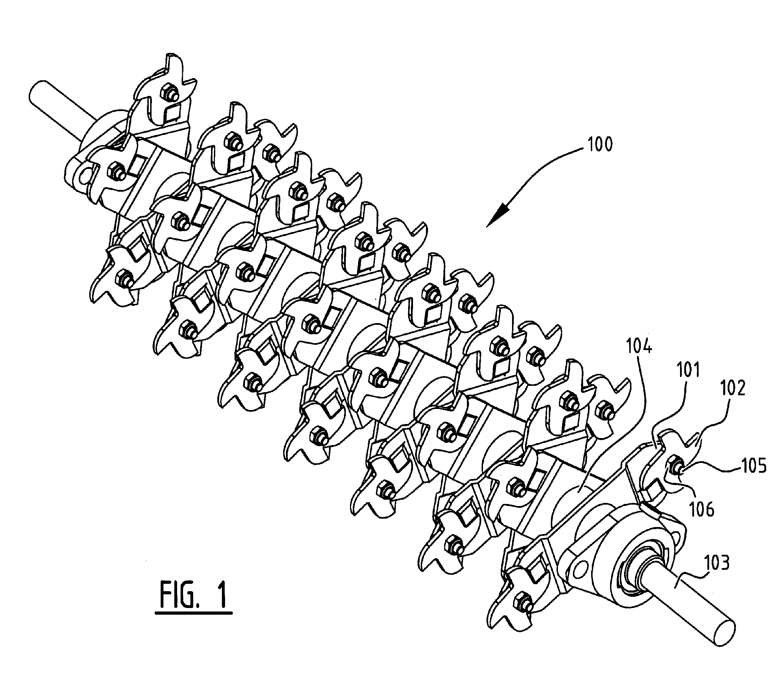

Figure 1 illustrates a shaft assembly 100 intended for rotatable mounting in a frame of a lawn aerator or verticutter. The lawn aerator is typically further provided with a motor, for instance an electric motor or a petrol engine, for rotatingly driving shaft 103. Shaft 103 is provided with a plurality of mounting arms 101 mounted at a distance from each other on shaft 103. A spacer 104 is provided for this purpose on shaft 103 between each pair of adjacent mounting arms 101. This spacer 104 can for instance be a metal or nylon spacer which is pushed over shaft 103. Mounting arms 101 are preferably manufactured from metal.

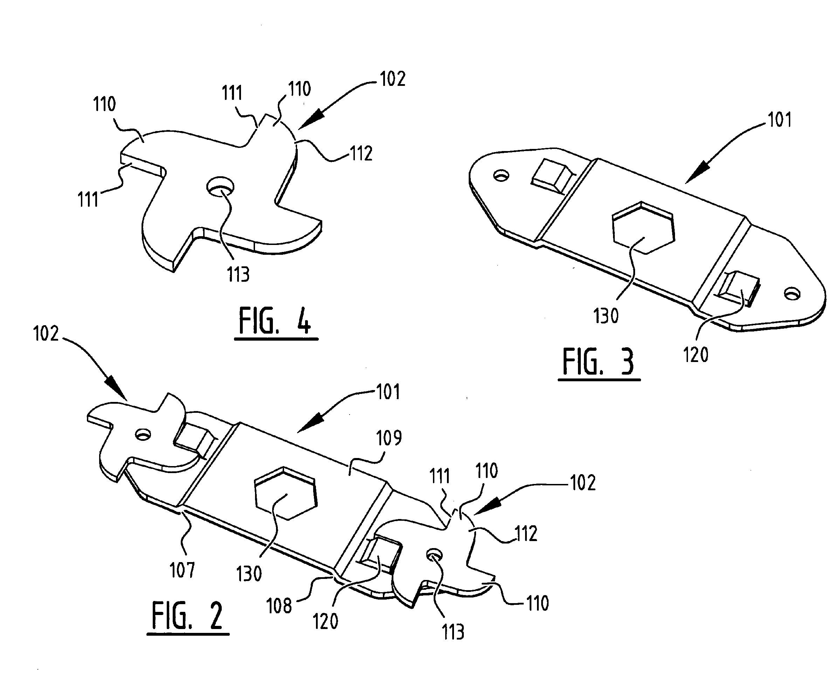

A mounting arm 101 is shown in detail in figure 2. Mounting arm 101 is substantially plate-like and has an elongate form. A blade body 102 is mounted on either side of the elongate mounting arm 101. Mounting arm 101 is provided with a central opening 130 through which the shaft 103 extends. According to the illustrated embodiment, opening 130 is not rotation-symmetrical such that mounting arm 101 can be mounted non-rotatably on shaft 103. As illustrated in figure 1, adjacent mounting arms can for instance be mounted at an angle of 60 degrees relative to each other on shaft 103 such that the blade bodies are distributed regularly over the periphery of the shaft. The plate-like mounting arm 101 can further have a relief 107, 108 so as to ensure that the plate-like blade bodies 102 do not protrude, or hardly so, relative to an upper side 109 of mounting arm 101.

Blade bodies 102 are mounted removably on mounting arms 101. The mounting of blade bodies 102 at both ends of mounting arms 101 can for instance take place using a bolt-nut assembly 105, 106, see figure 1, wherein bolt 105 passes through a central opening 113 of blade body 102. The blade bodies can in this way be easily removed and replaced, for instance in the case of wear. Since both the blade bodies 102 and the mounting arm 101 are flat, they can be fixed firmly against each other.

Blade body 102 is shown in detail in figure 4. The blade body is plate-like and formed with four blade parts 110 in regular distribution along the periphery of the blade body. Each blade part 110 has a substantially straight cutting edge 111 and an arcuate rear edge 112. Cutting edge 111 makes an angle of less than 90 degrees with the arcuate rear edge 112. Such a blade part 110 can cut into and dislodge disruptive elements present between the blades of grass during rotation of shaft 103.

Mounting arm 101 is shown in detail without blade bodies 102 in figure 3 and is provided with two protruding parts 120. Such a protruding part 120 can be formed by cutting out a tongue in mounting plate 101 and pushing this tongue outward in order to obtain a protruding part 120 intended for co-action with a cutting edge 111 of blade body 102. One of the blade parts 110 therefore functions here as stop part which co-acts with protruding part 120 and ensures that rotation of blade body 102 is avoided while the lawn aerator is in operation.

Figures 1-4 further illustrate that both the mounting arm and the blade bodies are preferably substantially flat, this such that blade body 102 can support with a flat side against mounting arm 101. The blade bodies are in this way supported in robust manner.

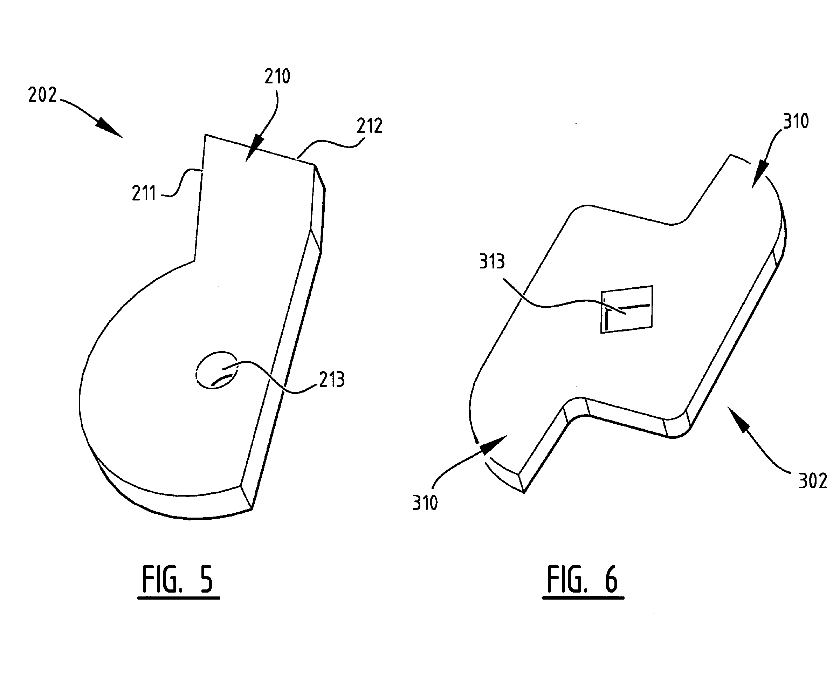

Figures 5 and 6 illustrate two further variants of blade bodies according to the invention. In the variant of figure 5 the blade body 202 is provided with one blade part 210 with a straight cutting edge 200 and an inclining rear edge 212. Blade body 202 is further provided with an opening 213 through which a bolt can be placed for the purpose of attaching blade body 202 to a mounting arm.

Figure 6 illustrates an embodiment of a blade body 302 with two blade parts 310. Blade parts 310 are somewhat similar here to the above described blade parts 110. Here also a first blade part 310 can function as the actual blade, while the second blade part can also function as stop. As illustrated, it is also possible to provide blade body 302 with a central opening 313 with a non-rotation-symmetrical form. When a shaft part is used with a section of complementary form, the blade body can then also be mounted non-rotatably on a mounting arm without a protruding part/stop part being required.

The skilled person will appreciate that the invention is not limited to the above illustrated exemplary embodiments and that many variants and modifications can be envisaged within the scope of the invention, which is defined solely by the following claims.

## Claims

1. Device for aerating a lawn, comprising a frame in which a shaft (103) is rotatably mounted, **characterized in that** the shaft (103) is provided with a plurality of mounting arms (101), wherein each mounting arm (101) is provided with at least one removably mounted blade body (102), which blade body (102) is provided on the mounting arm (101) at a location such that disruptive elements in the lawn, such as moss and dead grass, are dislodged by the blade body (102) during the rotation of the shaft;
**characterized in that** each mounting arm (101) is provided with a protruding part (120);
wherein each blade body (102) is provided with at least a first blade part (110) and a second blade part (110), wherein the first blade part is configured to dislodge the disruptive elements between the blades of grass in the lawn; wherein the second blade part functions as a stop part configured to co-act with the protruding part of the mounting arm (101) in order to prevent the rotation of the blade body (102) relative to the mounting arm (101).

2. Device as claimed in claim 1, **characterized in that** the protruding part (120) is formed by a cut-out, outward pressed tongue which forms an integral part of the mounting arm (101).

3. Device as claimed in claim 1 or 2, wherein the first blade part and the second blade part are such that when the first blade part is worn, the blade body (102) can be mounted in rotated position such that the second blade part which has functioned as the stop part and is not yet worn, can be used as operational blade part for dislodging debris present between the blades of grass, while the worn first blade part can still be used as the stop part.

4. Device as claimed in any of the previous claims, **characterized in that** each blade body (102) is provided with at least a third blade part, and preferably a fourth blade part.

5. Device as claimed in claim 4, wherein the first, second, third, and optionally fourth blade part are arranged in a regular distribution over the periphery of the blade body.

6. Device as claimed in any one of the previous claims, **characterized in that** each blade part is an integral part of the blade body (102).

7. Device as claimed in any one of the previous claims, **characterized in that** each blade part has a substantially straight cutting edge (11) and an inclining or arcuate rear edge (12), which cutting edge makes an angle with the rear edge which is less than or equal to 90 degrees.

8. Device as claimed in any one of the previous claims, **characterized in that** each blade part is formed on the blade body (102).

9. Device as claimed in any one of the previous claims, **characterized in that** each mounting arm (101) is an elongate plate-like element with an opening through which the shaft (103) passes.

10. Device as claimed in claim 9, **characterized in that** the opening is arranged centrally in the mounting arm (101), and that a blade body (102) is arranged at either end of the mounting arm (101).

11. Device as claimed in any one of the previous claims, **characterized in that** each blade body (102) is attached by a bolt and a nut; and/or
**in that** the blade body (102) is provided with an opening through which the bolt passes; and/or
**in that** each blade body (102) is substantially flat and supports with a part of a flat side thereof against a flat side of the mounting arm (101); and/or
**in that** a spacer is provided on the shaft (103) between each pair of adjacent mounting arms (101) of the plurality of mounting arms (101).

12. Device as claimed in any one of the previous claims, **characterized in that** each blade body (102) is provided with a non-rotation-symmetrical opening through which a shaft part with a complementary shape passes for the purpose of attaching the blade body (102) to the mounting arm (101).

13. Device as claimed in any one of the previous claims, **characterized in that** the device further comprises drive means for rotatingly driving the shaft (103).

14. Shaft assembly for use in a device as claimed in any of the foregoing claims, which shaft assembly comprises a shaft (103) provided with a plurality of mounting arms (101), wherein each mounting arm (101) is provided with at least one removably mounted blade body (102), which blade body (102) is provided on the mounting arm (101) at a location such that disruptive elements in the lawn, such as moss and dead grass, are dislodged by the blade body (102) during the rotation of the shaft (103); **characterized in that** each mounting arm (101) is provided with a protruding part (120);.
wherein each blade body (102) is provided with at least a first blade part (110) and a second blade part (110), wherein the first blade part is configured to dislodge the disruptive elements between the blades of grass in the lawn; wherein second blade part functions as a stop part configured to co-act with the protruding part of the mounting arm (101) in order to prevent the rotation of the blade body (102) relative to the mounting arm (101).

15. Blade body (102) for use in a device as claimed in any of the foregoing claims, **characterized in that** each blade body (102) is provided with at least a first blade part (110) and a second blade part (110), wherein the first blade part is configured to dislodge the disruptive elements between the blades of grass in the lawn; wherein second blade part functions as a stop part configured to co-act with the protruding part of the mounting arm (101) in order to prevent the rotation of the blade body (102) relative to the mounting arm (101).

## Patentansprüche

1. Vorrichtung zum Lüften eines Rasens, umfassend ein Rahmen, in dem eine Welle (103) drehbar montiert ist, **gekennzeichnet dadurch, dass** die Welle (103) mit einer Vielzahl von Tragarmen (101) vorgesehen ist, wobei jeder Tragarm (101) mit zumindest einem abnehmbar montierten Klingenkörper (102) vorgesehen ist, wobei der Klingenkörper (102) an dem Tragarm (101) an einem Ort so vorgesehen ist, dass störende Bestandteile im Rasen, wie Moos und abgestorbene Gräser, durch den Klingenkörper (102) während des Rotierens der Welle entfernt werden; **dadurch gekennzeichnet, dass** jeder Tragarm (101) mit einem herausstehenden Teil (120) vorgesehen ist; wobei jeder Klingenkörper (102) mit zumindest einem ersten Klingenteil (110) und einem zweiten Klingenteil (110) vorgesehen ist, wobei der erste Klingenteil konfiguriert ist, die störenden Bestandteile zwischen den Grashalmen im Rasen zu entfernen; wobei der zweite Klingenteil als ein Stoppteil funktioniert, das konfiguriert ist mit dem herausstehenden Teil des Tragarms (101) zusammenzuwirken, um die Rotation des Klingenkörpers (102) relativ zum Tragarm (101) zu verhindern.

2. Vorrichtung nach Anspruch 1, **dadurch gekennzeichnet, dass** das herausstehende Teil (120) durch eine ausgeschnittene, nach außen gepresste Zunge ausgebildet ist, die einen integralen Teil des Tragarms (101) bildet.

3. Vorrichtung nach Anspruch 1 oder 2, wobei der erste Klingenteil und der zweite Klingenteil so sind, dass wenn der erste Klingenteil verschlissen ist, der Klingenkörper (102) in rotierter Position montiert werden kann, sodass der zweite Klingenteil, der als Stoppteil funktioniert hat und noch nicht verschlissen ist, als betriebsbereiter Klingenteil zum Entfernen von Ablagerungen, die zwischen den Grashalmen präsent sind verwendet werden kann, während der verschlissene erste Klingenteil noch als Stoppteil verwendet werden kann.

4. Vorrichtung nach einem der vorherigen Ansprüche, **dadurch gekennzeichnet, dass** jeder Klingenkörper (102) mit zumindest einem dritten Klingenteil und bevorzugt mit einem vierten Klingenteil vorgesehen ist.

5. Vorrichtung nach Anspruch 4, wobei der erste, zweite, dritte und optional vierte Klingenteil in einer regelmäßigen Verteilung über die Peripherie des Klingenkörpers angeordnet sind.

6. Vorrichtung nach einem der vorherigen Ansprüche, **dadurch gekennzeichnet, dass** jeder Klingenteil ein integraler Teil des Klingenkörpers (102) ist.

7. Vorrichtung nach einem der vorherigen Ansprüche, **dadurch gekennzeichnet, dass** jeder Klingenteil eine im Wesentlichen gerade Schnittkante (11) und eine geneigte oder bogenförmige Hinterkante (12) aufweist, wobei dessen Schnittkante einen Winkel mit der Hinterkante aufweist, der weniger oder gleich 90 Grad ist.

8. Vorrichtung nach einem der vorherigen Ansprüche, **dadurch gekennzeichnet, dass** jeder Klingenteil an dem Klingenkörper (102) ausgebildet ist.

9. Vorrichtung nach einem der vorherigen Ansprüche, **dadurch gekennzeichnet, dass** jeder Tragarm (101) ein längliches, plattenähnliches Element mit einer Öffnung ist, durch die die Welle (103) läuft.

10. Vorrichtung nach Anspruch 9, **dadurch gekennzeichnet, dass** die Öffnung zentral in dem Tragarm (101) angeordnet ist und dass ein Klingenkörper (102) an jedem Ende des Tragarms (101) angeordnet ist.

11. Vorrichtung nach einem der vorherigen Ansprüche, **dadurch gekennzeichnet, dass** jeder Klingenkörper (102) durch eine Schraube und eine Mutter befestigt ist; und/oder dass der Klingenkörper (102) mit einer Öffnung vorgesehen ist, durch die die Schraube läuft; und/oder
dass jeder Klingenkörper (102) im Wesentlichen flach ist und mit einem Teil einer flachen Seite davon gegen eine flache Seite des Tragarms (101) stützt; und/oder
dass ein Distanzstück an der Welle (103) zwischen jedem Paar von benachbarten Tragarmen (101) der Vielzahl von Tragarmen (101) vorgesehen ist.

12. Vorrichtung nach einem der vorherigen Ansprüche, **dadurch gekennzeichnet, dass** jeder Klingenkörper (102) mit einer nicht-rotierenden symmetrischen Öffnung vorgesehen ist, durch die ein Wellenteil mit einer komplementären Form läuft, mit dem Zweck, den Klingenkörper (102) an dem Tragarm (101) zu befestigen.

13. Vorrichtung nach einem der vorherigen Ansprüche, **dadurch gekennzeichnet, dass** die Vorrichtung ferner Antriebsmittel zum rotierenden Antreiben der Welle (103) umfasst.

14. Wellenaufbau zur Verwendung in einer Vorrichtung nach einem der vorherigen Ansprüche, wobei der Wellenaufbau eine Welle (103) umfasst, die mit einer Vielzahl von Tragarmen (101) vorgesehen ist, wobei jeder Tragarm (1019) mit zumindest einem abnehmbar gelagerten Klingenkörper (102) vorgesehen ist, wobei der Klingenkörper (102) an dem Tragarm (101) an einem Ort so vorgesehen ist, dass störende Bestandteile im Rasen, wie Moos und abgestorbene Gräser durch den Klingenkörper (102) während der Rotation der Welle (103) entfernt werden; **gekennzeichnet dadurch, dass** jeder Tragarm (101) mit einem herausstehenden Teil vorgesehen ist; wobei jeder Klingenkörper (102) mit zumindest einem ersten Klingenteil (110) und einem zweiten Klingenteil (110) vorgesehen ist, wobei der erste Klingenteil konfiguriert ist, störende Bestandteile zwischen Grashalmen im Rasen zu entfernen, wobei der zweite Klingenteil als Stoppteil funktioniert, das konfiguriert ist, mit dem herausstehenden Teil des Tragarms (101) zusammenzuwirken, um die Rotation des Klingenkörpers (102) relativ zu dem Tragarm (101) zu verhindern.

15. Klingenkörper (102) zur Verwendung in einer Vorrichtung nach einem der vorherigen Ansprüche, **dadurch gekennzeichnet, dass** jeder Klingenkörper (102) mit zumindest einem ersten Klingenteil (110) und einem zweiten Klingenteil vorgesehen ist, wobei der erste Klingenteil konfiguriert ist, störende Bestandteile zwischen den Grashalmen im Rasen zu entfernen; wobei der zweite Klingenteil als Stoppteil funktioniert, das konfiguriert ist, mit dem herausstehenden Teil des Tragarms (101) zusammenzuwirken, um die Rotation des Klingenkörpers (102) relativ zum Tragarm (101) zu verhindern.

## Revendications

1. Dispositif pour aérer une pelouse, comprenant un cadre, dans lequel un arbre (103) est monté de manière à pouvoir tourner, **caractérisé en ce que** l'arbre (103) est doté d'une pluralité de bras de montage (101), dans lequel chaque bras de montage (101) est doté d'au moins un corps de lame monté de manière amovible (102), lequel corps de lame (102) est prévu sur le bras de montage (101) à un endroit de manière à ce que des éléments disruptifs dans la pelouse tels que la mousse et l'herbe morte soient détachés par le corps de lame (102) pendant la rotation de l'arbre ;
**caractérisé en ce que** chaque bras de montage (101) est doté d'une partie en saillie (120) ; dans lequel chaque corps de lame (102) est doté d'au moins une première partie de lame (110) et d'une seconde partie de lame (110), dans lequel la première partie de lame est configurée pour détacher les éléments disruptifs entre les brins d'herbe dans la pelouse ; dans lequel la seconde partie de lame fonctionne comme une partie d'arrêt configurée pour interagir avec la partie en saillie du bras de montage (101) dans le but d'éviter la rotation du corps de lame (102) par rapport au bras de montage (101).

2. Dispositif selon la revendication 1, **caractérisé en ce que** la partie en saillie (120) est formée par une languette découpée pressée vers l'extérieur qui forme une partie intégrante du bras de montage (101).

3. Dispositif selon la revendication 1 ou 2, **caractérisé en ce que** la première partie de lame et la seconde partie de lame sont telles que lorsque la première partie de lame est usée, le corps de lame (102) peut être monté dans une position tournée telle que la seconde partie de lame qui a fonctionné comme la partie d'arrêt et n'est pas encore usée, puisse être utilisée comme partie de lame opérationnelle pour détacher les débris présents entre les brins d'herbe alors que la première partie de lame usée peut toujours être utilisée comme partie d'arrêt.

4. Dispositif selon l'une quelconque des revendications précédentes, **caractérisé en ce que** chaque corps de lame (102) est doté d'au moins une troisième partie de lame et de préférence une quatrième partie de lame.

5. Dispositif selon la revendication 4, dans lequel la première, deuxième, troisième et, en option, la quatrième partie de lame sont agencées dans une distribution régulière sur la périphérie du corps de lame.

6. Dispositif selon l'une quelconque des revendications précédentes, **caractérisé en ce que** chaque partie de lame est une partie intégrante du corps de lame (102).

7. Dispositif selon l'une quelconque des revendications précédentes, **caractérisé en ce que** chaque partie de lame a une arête de coupe sensiblement droite (11) et une arête arrière inclinée ou arquée (12), laquelle arête de coupe forme un angle avec l'arête arrière qui est inférieur ou égal à 90 degrés.

8. Dispositif selon l'une quelconque des revendications précédentes, **caractérisé en ce que** chaque partie de lame est formée sur le corps de lame (102).

9. Dispositif selon l'une quelconque des revendications précédentes, **caractérisé en ce que** chaque bras de montage (101) est un élément de type plaque allongée avec une ouverture à travers laquelle l'arbre (103) passe.

10. Dispositif selon la revendication 9, **caractérisé en ce que** l'ouverture est agencée centralement dans le bras de montage (101) et **en ce qu'**un corps de lame (102) est agencé sur l'une ou l'autre extrémité du bras de montage (101).

11. Dispositif selon l'une quelconque des revendications précédentes, **caractérisé en ce que** chaque corps de lame (102) est attaché par un boulon et un écrou ; et/ou
**en ce que** le corps de lame (102) est doté d'une ouverture par laquelle le boulon passe ; et/ou
**en ce que** chaque corps de lame (102) est sensiblement plat et s'appuie avec une partie d'un côté plat de celui-ci contre un côté plat du bras de montage (101) ; et/ou
**en ce qu'**un élément d'écartement est prévu sur l'arbre (103) entre chaque paire de bras de montage adjacents (101) de la pluralité de bras de montage (101).

12. Dispositif selon l'une quelconque des revendications précédentes, **caractérisé en ce que** chaque corps de lame (102) est doté d'une ouverture non symétrique en rotation, à travers laquelle passe une partie d'arbre de forme complémentaire afin d'attacher le corps de lame (102) au bras de montage (101).

13. Dispositif selon l'une quelconque des revendications précédentes, **caractérisé en ce que** le dispositif comprend en outre des moyens d'entraînement pour l'entraînement rotatif de l'arbre (103).

14. Ensemble d'arbre destiné à être utilisé dans un dispositif selon l'une quelconque des revendications précédentes, lequel ensemble d'arbre comprend un arbre (103) doté d'une pluralité de bras de montage (101), dans lequel chaque bras de montage (101) est doté d'au moins un corps de lame monté de manière amovible (102), lequel corps de lame (102) est prévu sur le bras de montage (101) à un endroit tel que des éléments disruptifs dans la pelouse tels de la mousse et de l'herbe morte soient détachés par le corps de lame (102) pendant la rotation de l'arbre (103) ; **caractérisé en ce que** chaque bras de montage (101) est doté d'une partie en saillie (120) ;
dans lequel chaque corps de lame (102) est doté d'au moins une première partie de lame (110) et d'une seconde partie de lame (110), dans lequel la première partie de lame est configurée pour détacher les éléments disruptifs entre les brins d'herbe dans la pelouse ; dans lequel la seconde partie de lame fonctionne comme une partie d'arrêt configurée pour interagir avec la partie en saillie du bras de montage (101) dans le but d'éviter la rotation du corps de lame (102) par rapport au bras de montage (101).

15. Corps de lame (102) destiné à être utilisé dans un dispositif selon l'une quelconque des revendications précédentes, **caractérisé en ce que** chaque corps de lame (102) est doté d'au moins une première partie de lame (110) et d'une seconde partie de lame (110), dans lequel la première partie de lame est configurée pour détacher les éléments disruptifs entre les brins d'herbe dans la pelouse ; dans lequel la seconde partie de lame fonctionne comme une partie d'arrêt configurée pour interagir avec la partie en saillie du bras de montage (101) dans le but d'éviter la rotation du corps de lame (102) par rapport au bras de montage (101).
